# EUROPÄISCHE PATENTANMELDUNG

(11) **EP 1 975 130 A2**
(43) Veröffentlichungstag der Anmeldung: **01.10.2008**
(21) Anmeldenummer: 08004883.8
(22) Anmeldetag: 15.03.2008
(51) Int. Cl.: C02F 1/34, C02F 103/00

(54) **Verfahren zum Entkeimen des Ballatswassers von Schiffen**

(30) Priorität: 27.03.2007 DE 202007004274 U; 21.12.2007 DE 102007063062
(71) Anmelder: Porow GmbH, 22525 Hamburg (DE)
(72) Erfinder: Porep, Thomas, 23775 Grossenbrode (DE); Marmerow, Bernd, 22339 Hamburg (DE)
(74) Vertreter: Tönnies, Jan G.

(57) **Zusammenfassung**

Verfahren zum Entkeimen des Ballastwassers von Schiffen, gekennzeichnet durch Führen des aufgenommenen und/oder abgelassenen Ballastwassers durch einen mit einem Stator und einem Rotor versehenen Homogenisator, wobei die abzutötenden Mikroorganismen in dem zwischen dem Stator und dem Rotor ausgebildeten Spalt durch die auf sie einwirkenden Scherkräfte und/oder die dort auftretende Kavitation zerrissen werden.

## Beschreibung

Die Erfindung betrifft ein Verfahren zum Entkeimen des Ballastwassers von Schiffen.

Die Verschleppung von Arten in Gebiete außerhalb ihrer natürlichen Verbreitung durch Schiffe ist ein großes ökologisches Problem. Dabei erfolgt das anthropogene Einbringen gebietsfremder Arten etwa durch Anhaften am Schiffrumpf oder auch durch das Aufnehmen und Ablassen von Ballastwasser, wobei insbesondere mit dem Ballastwasser eine große Anzahl von oftmals einzelligen Individuen, z.B. Algen, Pilzen, Bakterien und andere Mikroorganismen, eingeschleppt werden können.

Um die ubiquitäre Verbreitung gebietsfremder Arten einzudämmen und das Vorkommen mariner Organismen auf deren natürlichen Verbreitungsgebiete zu beschränken, werden zunehmend Anstrengungen unternommen, das in den Schiffskörper aufgenommene Ballastwasser von Organismen zu reinigen oder im Ballastwasser auftretende Organismen abzutöten, damit diese sich in artfremden Gebieten nicht ausbreiten und das dort vorhandene Ökosystem nicht stören können.

Eine allgemeine, kurze Übersicht über invasive gebietsfremde Arten, deren Verbringung durch Schiffe und Maßnahmen zur Vermeidung der Einschleppung gebietsfremder Arten ist im FORSCHUNGS*Report* 2/2003 des Bundesministeriums für Verbraucherschutz, Ernährung und Landwirtschaft wiedergegeben (S Gollasch, J Gröger. Im Schiff unerkannt über die Weltmeere. Artverschleppungen - Gefahrenpotenzial und Gegenmaßnahmen im marinen Bereich. ebd.). Zu den dort erwähnten Gegenmaßnahmen gehören a) mechanische Verfahren, z.B. Filtration, Rotation, b) physikalische Verfahren, z.B. Erwärmung, UV-Bestrahlung oder Ultraschall-Bestrahlung und c) chemische Verfahren.

Die bekannten Verfahren leiden an dem Nachteil, dass diese entweder selbst schädlichen Einfluss auf Ökosysteme ausüben (insbesondere die unter c) genannten chemischen Verfahren) oder bei hohem apparativem und hohem energetischem Aufwand nur eine unzureichende Entkeimung, d.h. Abtötung der im Ballastwasser vorhandenen Organismen, ermöglichen (z.B. bei UV-Bestrahlung).

Aufgabe der Erfindung ist es daher ein einfaches und effizientes Verfahren zum Entkeimen von Ballastwasser auf Schiffen bereitzustellen.

Die Aufgabe wird durch das Verfahren mit den in Anspruch 1 genannten Merkmalen gelöst. Die Unteransprüche geben vorteilhafte Ausgestaltungen der Erfindung wieder.

Grundgedanke der Erfindung ist es, von einem Schiff aufgenommenes oder von einem Schiff abgelassenes Ballastwasser vor dem Einbringen in Ballastwassertanks bzw. vor Abgabe an die Umwelt durch einen mit einem Stator und einem Rotor versehenen Homogenisator zu führen, wobei die durch den zwischen dem Stator und dem Rotor ausgebildeten Spalt geführten Organismen durch die auf sie einwirkenden Scherkräfte und/oder die dort auftretende Kavitation zerrissen und abgetötet werden.

Selbstverständlich ist es auch möglich, das in die Tanks aufgenommene Ballastwasser einer kontinuierlichen oder einer periodischen Behandlung mit dem Homogenisator zu unterwerfen, wobei der Homogenisator selbst im Tank oder in einer Leitung angeordnet sein kann, die das Ballastwasser aus dem Tank zum Homogenisator und vom Homogenisator wieder in den Tank führt.

Bevorzugt kann die Abtötungsrate, also die Effektivität des Homogenisators mit die Organismen abgetötet werden können, durch Einstellen der Spaltbreite des Homogenisators, der Drehgeschwindigkeit des Rotors und/oder des Drucks des dem Homogenisator zugeführten Wassers eingestellt werden.

Zusätzlich kann vorgesehen sein, dass das Ballastwasser filtriert wird bevor es dem Homogenisator zugeführt wird. Dadurch können Mikroorganismen und Schwebstoffe bereits vor der mechanischen Zerkleinerung durch den Homogenisator abgefangen und eine Kontamination des Ballastwassers mit Lebewesen vermieden werden. Gleichzeitig dient die vorgeschaltete Filtration auch als Schutz vor der Beschädigung des Homogenisators durch Objekte, die einen maximalen Durchmesser haben, der größer als das durch Rotor und Stator vorgegebene Spaltmaß ist, und die nicht durch den Homogenisator zerkleinert werden können.

Besonders bevorzugt ist dem Homogenisator eine Nachbehandlungsstufe für das mit dem Homogenisator behandelte Ballastwasser nachgeschaltet. Dieses kann eines der aus dem Stand der Technik bekannten biozid-wirkenden Verfahren, wie z.B. UV- oder Ultraschall-Bestrahlung, sein oder aber ein weiterer Homogenisator, wobei das Spaltmaß des weiteren Homogenisators von dem Spaltmaß des ersten Homogenisators verschieden, besonders bevorzugt kleiner, ist.

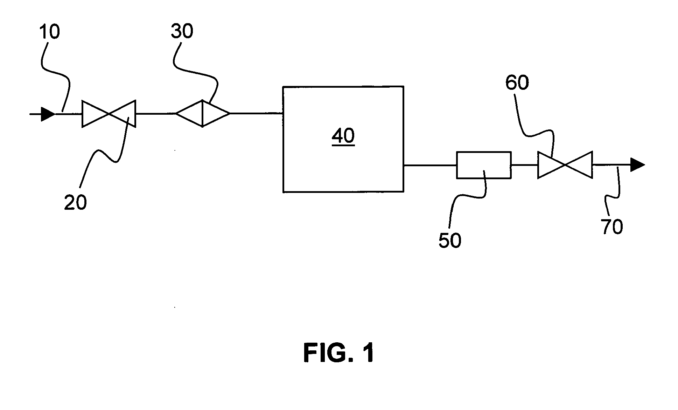

Die einzige Fig. 1 zeigt schematisch einen besonders bevorzugten apparativen Aufbau zur Durchführung des Verfahrens nach der Erfindung.

Fig. 1 zeigt eine dem Homogenisator 40 in Pfeilrichtung Ballastwasser zuführende Leitung 10 und eine vom Homogenisator 40 behandeltes Ballastwasser abführende Leitung 70. In beiden Leitungen ist jeweils ein Ventil 20, 60 vorgesehen, mit dem der Ballastwasserfluss in den Leitungen 10, 70 reguliert werden kann.

Dem Homogenisator 40 vorgeschaltet befindet sich in Fig. 1 ein Filter 30, der grobe Bestandteile aus dem Ballastwasser herausfiltern kann bevor diese in den Homogenisator gelangen.

Dem Homogenisator 40 nachgeschaltet befindet sich in Fig. 1 eine Nachbehandlungsvorrichtung 50, in der das bereits mit dem Homogenisator 40 behandelte Ballastwasser wie oben beschrieben mit einem weiteren oder demselben bioziden Verfahren nachbehandelt wird.

Obwohl die Leitung 10 und die Leitung 70 in gestreckter Konformation dargestellt sind, kann es sich bei diesem beispielhaft dargestellten System um ein Kreislaufsystem handeln, das an einen (nicht dargestellten) Ballastwassertank angeschlossen ist.

Als besonders wirkungsvoll hat sich herausgestellt, wenn ein Homogenisator mit einem Spaltmaß zwischen Stator und Rotor von wenigstens 5 µm verwendet wird.

## Patentansprüche

1. Verfahren zum Entkeimen des Ballastwassers von Schiffen,
**gekennzeichnet durch**
Führen des aufgenommenen und/oder abgelassenen Ballastwassers **durch** einen mit einem Stator und einem Rotor versehenen Homogenisator,
wobei die abzutötenden Mikroorganismen in dem zwischen dem Stator und dem Rotor ausgebildeten Spalt **durch** die auf sie einwirkenden Scherkräfte und/oder die dort auftretende Kavitation zerrissen werden.

2. Verfahren nach Anspruch 1, **gekennzeichnet durch** Wählen der Entkeimungsrate **durch** Einstellen der Spaltbreite des Homogenisators, der Drehgeschwindigkeit des Rotors und/oder des Drucks des dem Homogenisator zugeführten Wassers.
